(19)

Europäisches Patentamt
European Patent Office
Office européen des brevets

(11)  **EP 3 285 075 A1**

(12)  **EUROPEAN PATENT APPLICATION**

(43) Date of publication:
**21.02.2018 Bulletin 2018/08**

(51) Int Cl.:
**G01Q 60/30** (2010.01)     **G02B 21/00** (2006.01)

(21) Application number: **16382398.2**

(22) Date of filing: **19.08.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **CONSEJO SUPERIOR DE
INVESTIGACIONES CIENTIFICAS**
**28006 Madrid (ES)**

(72) Inventors:
• **GÓMEZ RODRÍGUEZ, Andrés**
  **08193 Cerdanyola del Vallès  (Barcelona) (ES)**

• **GICH GARCÍA, Marti**
  **08193 Cerdanyola del Vallès  (Barcelona) (ES)**
• **PUIG MOLINA, María Teresa**
  **08193 Cerdanyola del Vallès  (Barcelona) (ES)**
• **OBRADORS BERENGUER, Francesc Xavier**
  **08193 Cerdanyola del Vallès  (Barcelona) (ES)**
• **CARRETERO GENEVRIER, Adrien**
  **34090 Montpellier (FR)**

(74) Representative: **Pons**
**Glorieta Ruben Dario 4**
**28010 Madrid (ES)**

(54)  **DEVICE AND METHOD FOR MAPPING FERROELECTRIC AND/OR PIEZOELECTRIC SAMPLES**

(57)  The present invention is related to a new direct piezoelectric force microscope (1) and the method for imaging and/or characterizing ferroelectric and/or piezoelectric samples using the direct piezoelectric force microscope (1). This device and this method obtain a direct quantitative measurement of the piezoelectric constant in piezoelectric and/or ferroelectrics samples by using amplifier means (5) and a probe that comprises a tip (3) which is adapted to discharge all the superficial charge and strain a piezoelectric material in order to collect the charge build up by the direct piezoelectric effect.

FIG.1

EP 3 285 075 A1

**Description**

OBJECT OF THE INVENTION

The present invention relates to a device and a method for nanoscale imaging and/or characterization of ferroelectric and/or piezoelectric samples.

More particularly, the present invention detects and represents at least the piezoelectric charge generated through a direct piezoelectric effect at the ferroelectric and/or piezoelectric sample.

BACKGROUND OF THE INVENTION

Piezoelectric and ferroelectric materials have found their position in ordinary life applications. Their use in electronic industry have improved capacitors, provided new piezoelectric oscillators, new dynamic access random memories or phased-array radar detectors. Their use is extending to other fields, as active elements of several everyday applications, from ink-jet printers to ultrasound generators, representing a billion euro industry. Specially, piezoelectric and ferroelectric materials are a significant part of modern technology: ultrasound generators for echography scanners, lithotripters, ultrasound cleaners, shock detectors within airbags, ABS systems, accelerometers, diesel injection valves, fuel level meters, tire pressure sensors, parking aid systems or vibration dampers, among others.

Ferroelectric and piezoelectric materials have been widely studied since its discovery in the early 1920. Understanding the physical phenomena underneath has transformed the use of piezoelectric materials from a laboratory curiosity to a new industry.

Piezoelectricity is a property presented in some materials that can deform under an electric field and, conversely, they can produce an electric field when deformed. They, thus, transform mechanical energy into electrical energy and vice versa. In order to keep the pace for novel future applications, the understanding of the physics behind the piezoelectric effect is a must.

According to this, the nanoscale characterization of ferroelectric materials has been able by the use of an Atomic Force Microscope (AFM) which allows imaging and manipulation the ferroelectric domains of the ferroelectric sample and studying electromechanical behavior of piezoelectric sample.

In particular, this has been achieved by the use of a Piezoresponse Force Microscopy (PFM) which is a technique based in the AFM that uses a scanning probe procedure that allows the visualization of ferroelectric domain structures. PFM uses an external ac voltage to modulate the material vibration through the "converse piezoelectric effect" while monitoring the resulting vibration amplitude and phase of the tip through a lock-in amplifier.

Nowadays, PFM is the most widely used technique for the nanoscale and mesoscale characterization of ferroelectric and/or piezoelectric materials. PFM method measures displacement in piezoelectric materials as a result of the "converse piezoelectric effect" which takes place when a strain, or force, is produced upon application of an electric field.

However, in numerous cases, this technique presents different issues while measuring the converse piezoelectric effect. For instance, electrostatic phenomena can induce a piezoelectric signal, even though the material subject to study is not piezoelectric. Moreover, different problems for quantitative analysis of the piezoelectric coefficient d33 have arisen, as the piezoelectric signal obtained from the electromechanical behavior cannot be fully separated from other sources. This issue causes that the d33 piezoelectric signal is overestimated by using PFM as a quantitative tool or even it can cause the measurement of a d33 piezoelectric constant into a non-piezoelectric material. The problem is not only present into piezoelectric material, but also into ferroelectric material, as spectroscopy data and imaging can reveal ferroelectricity into a sample that is not ferroelectric.

Additionally, subsequent improvement into standard PFM technique, like Switching Spectroscopy PFM (SS-PFM), did not solve the arising artifact problems.

Therefore, recently has appeared a new method known as Charge Gradient Microscopy (CGM) which is a method that uses an AFM to apply a constant force, through its tip, to a sample in order to collect current by a high-speed amplifier. While applying this constant force, the AFM is capable of scrapping the surface charge present into a ferroelectric material surface. However, CGM method cannot reveal the piezoelectricity nor the ferroelectricity characteristics of a sample, as it can scrap the surface charge of a sample but it does not measure the charge generated by the piezoelectric effect. The surface charge information available through this technique is not related to the piezoelectricity constant of the material to study. Moreover, the method cannot provide quantitative d33 piezoelectric constant.

DESCRIPTION OF THE INVENTION

In a first aspect of invention, it is a direct piezoelectric force microscope for imaging and/or characterizing ferroelectric and/or piezoelectric samples that comprises:

- a probe having a tip, wherein the tip is adapted to move across the surface of the sample so as to discharge all the superficial charges of the sample and once discharged, applying a mechanical load to generate a direct piezoelectric effect within the sample, and
- a measurement unit that is connected to the probe for obtaining a generated current signal that comprises the direct piezoelectric effect of the sample, and wherein the measurement unit comprises amplifier means in order to transform the generated current into a voltage signal that comprises nanoscale information about the topography of the sample and/or its ferroelectric and/or piezoelectric properties.

This nanoscale information about the sample comprises at least one of the following features: the ferroelectric domain structures of the sample, the piezoelectric constant of the sample such as d33, d31, e31 or e33, the topography of the surface of the sample, a current map of the related to the ferroelectricity of the sample, a PFM phase/amplitude of the sample, a piezopower generated by sample, or a combination of these features.

Preferably, the probe is adapted to move across the surface of the sample at a plurality of speeds.

Preferably, the probe is adapted to apply a mechanical load to the sample surface between 1 nN to 5N.

Preferably, the measurement unit comprises an electrical ground plug for connecting the lower part of the sample and the probe to ground.

Preferably, the measurement unit comprises a communication port for connecting direct piezoelectric force microscope to a processing unit.

The processing unit comprises a graphical interface, and wherein the processing unit processes the voltage signal in order to be represented by the graphical interface.

The amplifier means comprise at least:

- a transimpedance amplifier that comprises two inputs and an output, wherein one input is connected to a ground electrical connection and the other input is connected to the tip in order to receive the current map signal for converting it to a measurement voltage signal at its output.

The transimpedance amplifier has a low leakage current that is less than 20 fA and a bandwidth that is at least 1 Hz.

Preferably, the transimpedance amplifier has a low leakage current that is less than 0.1 fA.

Moreover, the AFM tip can apply a predefined force with picoNewton (pN) precision, up to maximum values of hundreds of microNewtons ($\mu$N). Such force, if applied to the piezoelectric sample, will generate a charge, which measured in a given time, will be translated into a current production. Particularly, applying a 100 $\mu$N force into a 10 pC/N piezoelectric sample will generate a charge of 1 fC, a charge that will produce a current of 1 fA if generated in 1 s, 2 fA if generated in 0.5 s and so on. Therefore, the amplifier means should be capable of measuring less than 1 fA with a BandWidth (BW) of at least 1 Hz. More importantly, the charge that the amplifier leaks has to be well below that desired threshold of 1 fA, otherwise a substantial part of the current will be lost during measurements.

Optionally, the amplifier means comprise:

- a first voltage amplifier that comprises two inputs and an output, wherein one input is connected to a ground electrical connection and the other input is connected to the output of the transimpedance amplifier in order to realize a first increase of the amplitude of the measurement voltage current signal at its output, and
- a second voltage amplifier that comprises two inputs and an output, wherein one input is connected to a ground electrical connection and the other input is connected to the output of the first voltage amplifier in order to realize a second increase of the amplitude of the measurement voltage current signal at its output.

Preferably, the probe is comprised by an atomic force microscope, wherein the tip of the probe is comprised by a cantilever connected to a measurement unit.

When the probe is comprised by an atomic force microscope, it is adapted to apply a mechanical load to the sample surface between 1 nN to 500 $\mu$N.

Preferably, the probe is comprised by a nanoindenter, wherein the tip of the probe is comprised by a holder connected to a measurement unit.

When the probe is comprised by a nanoindenter, it is adapted to apply a mechanical load to the sample surface between 1 nN to 5 N.

In a second aspect of the invention, it is a method for imaging and/or characterizing ferroelectric and/or piezoelectric samples using the direct piezoelectric force microscope described previously, wherein the method comprises the following steps:

a) placing the sample in the direct piezoelectric force microscope,

b) connecting the lower part of the sample and the probe o to the electrical ground plug,

c) generating a dry atmosphere at least over the measurement unit, wherein the humidity is lower that 10%,

d) moving the tip of the force microscopy across the surface of the sample, from left to right or from right to left, in order to discharge all the superficial charges of the sample through said tip,

e) collecting the generated current signal produced by the contact of the tip with the surface of the sample without superficial charges,

f) sending the generated current signal to the measurement unit in order to transform the generated current into a voltage signal that comprises obtaining nanoscale information about the topography of the sample and/or its ferroelectric and/or piezoelectric proprieties,

g) sending the voltage signal to the measurement unit, and

h) representing visually, through the graphical interface, the topography of the sample surface and/or its ferroelectric and/or piezoelectric proprieties.

Particularly, when the sample is a ferroelectric and/or piezoelectric sample the step d) comprises the following step:

- moving the tip across the surface of the sample while applying, through the tip, a predetermined mechanical load in order to generate an electrical topography signal that comprises the shifts of the probe produced by the different shapes of the sample surface.

Particularly, when the sample is a ferroelectric sample the step d) comprises the following step:

- moving the tip across the surface of the sample while applying, through the tip, a predetermined mechanical load in order to generate a current signal that comprises an electrical current map signal related to the ferroelectricity of the sample and which is proportional to the predetermined mechanical load.

Particularly, when the sample is a ferroelectric sample the step d) comprises the following step:

- moving the tip across the surface of the sample while applying, through the tip, a predetermined mechanical load in order to:

  - obtaining a topography signal that comprises the shifts of the probe, and
  - acquiring the generated current signal that comprises an electrical current map signal related to the ferroelectricity of the sample and which is proportional to the predetermined mechanical load.

Particularly, when the sample is a piezoelectric sample the step d) comprises the following step:

- placing the tip in at least a spot of the piezoelectric sample, and
- applying in the same spot, through the tip, a variable mechanical load, that can range from 1 nN to 5 N, in order to collect the generated current signal that comprises an electrical current signal generated by the piezoelectric charge of the sample and which is proportional to the variable mechanical load.

Particularly, when sample is a ferroelectric and/or piezoelectric sample the step d) comprises the following step:

- moving the tip across the surface of the ferroelectric and/or piezoelectric sample from a left to a right point, while applying, through the tip, a predetermined mechanical load in order to collect the generated current signal that comprises a trace current signal generated by the piezoelectric effect from measured form left to right of sample, and which is proportional to the predetermined mechanical load,
- moving the tip across the surface of the ferroelectric and/or piezoelectric sample from the right to the left point, while applying, through the tip, a predetermined mechanical load in order to collect the generated current signal that comprises a retrace current signal generated by the piezoelectric effect from measured form right to left of the sample, and which is proportional to the predetermined mechanical load,
- extracting a line profile from the trace current signal map, and/or the retrace current signal, against the distance covered by the tip,
- obtaining a profile of the electrical generated current signal vs time through the use of tip velocity,
- obtaining a generated charge by integrating the aforementioned electrical current signal, and
- calculating the piezoelectric constant of the sample through dividing the generated charge between the predetermined mechanical load applied by the tip.

Preferably, when the probe is comprised by an atomic force microscope, the atomic force microscope is establish to contact operation mode,

Therefore this direct piezoelectric force microscope and it method for mapping ferroelectric and/or piezoelectric samples, is able to measure the direct piezoelectric effect with the probe that can be comprised by the AFM or the nanoindenter, through the piezo charge generated by the material. As both tip and sample have shared grounds, the measured charge is build up by the direct piezoelectric effect providing a clear view, artifact-free piezoelectric information. The charge generated from piezoelectric effect is proven to be linear with the applied force. This is a key relation in order to fully distinguish piezoelectric charge generation from other possible physical phenomena.

By this device and method, as opposite of the background of the invention, it is possible to obtain the topography of the surface of ferroelectric sample as well as quantitatively determinate its piezoelectric coefficient or constant without any other physical phenomena.

DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:

Figure 1.- Shows an schematic representation of the present invention.

Figure 2a.- Shows a more detailed schematic of the sample, the tip and the amplifier means.

Figures 2b to 2d.- Show several physical model of interaction between the tip and the sample.

Figure 3a.- Shows a graphic of the DPFM Output Signal vs Time, where a 40 GΩ test resistor was connected to the electronic amplifier, while sample bias was incremented in a step-by-step manner the signal coming from the amplifier is recorded.

Figure 3b.- Shows a graphic of the DPFM Output (V) vs Calculated current (fA), where the experimental calibration constant is obtained.

Figure 3c.- Shows a graphic of the amplifier means (5) output voltage vs Applied Bias obtained by changing the applied bias through a 600 seconds, 600 points, curve.

Figure 4a.- Shows a piezo-generated current map obtained when the tip scans from left to right-trace (DPFM-Si) of the sample.

Figure 4b.- Shows a piezo-generated current map obtained when the tip scans from right to left-retrace (DPFM-So) of the sample.

Figure 4c.- Shows a PFM phase image of the sample.

Figure 4d.- Shows a PFM amplitude image of the same sample, obtained simultaneously with DPFM signals.

Figure 5a.- Shows a topography image of the sample.

Figure 5b.- Shows a friction image of the sample, obtained at the same time as the topography and images of Figure 4a, 4b, 4c and 4d.

Figure 6a.- Shows a graphic of the DPFM-Si and DPFM-So profiles vs Distance (μm), obtained extracting a single profile from the images plotted in figure 4a and 4b.

Figure 6b.- Shows a graphic of the DPFM-Si and PFM phase profiles vs Distance (μm), obtained from images figures 4a and 4c.

Figure 6c.- Shows a graphic of the DPFM-Si and PFM amplitude profiles vs Distance (μm), obtained from images figures 4a and 4d.

Figure 7a.- Shows a DPFM-Si of the sample obtained at different applied forces.

Figure 7b.- Shows a DPFM-So of the sample, obtained at different applied forces.

Figure 7c.- Shows a graphic of the Charge vs Force spectroscopy sweep obtained by integrating the profiles of Figure 7a.

Figure 7d.- Shows a graphic of current profiles extracted from figure 7a at different forces applied.

Figure 8a.- Shows a DPFM-So image obtained by digitally zoomed of the figure 7b.

Figure 8b.- Shows the figure 8a statistically threated.

Figure 8c.- Shows a SEM image of the tip used along the measurements of the sample.

Figure 9a.- Shows the piezopower generated calculated from DPFM-Si.

Figure 9b.- Shows the piezopower generated calculated from DPFM-So images.

Figures 9c and 9d.- Show random selected profiles from figures 9a and 9b, respectively, in order to see the differences between the piezopower generation at domainwalls and at a single domain.

Figure 10a.- Shows the DPFM-Si image of a zoomed region of the sample recorded in order to fully integrate the charge generated.

Figure 10b.- Shows the DPFM-So image of a zoomed region of the sample recorded in order to fully integrate the charge generated.

Figures 10c and 10d.- Show the resulting profiles plotted in figures 10a and 10b, respectively.

Figure 10e.- Shows the graphic of the Current-vs-Force spectroscopy sweep performed in the Up domain configuration, where different Force sweep rates where applied.

Figure 10f.- Shows the graphic of Current vs Force spectroscopy sweep for an Up domain (top) and a Down domain (bottom).

Figure 11a.- Shows a DPFM-Si image of the sample acquired at different proposed tip speed of 0.65, 1,3 and 2,6 $\mu$m/s.

Figure 11b.- Shows a DPFM-So image of the sample acquired at different proposed speeds of 0.65, 1,3 and 2,6 $\mu$m/s.

Figure 11c.- Shows a Current vs Time graph extracted from the figure 11a, which corresponds to the current generated while scanning at the different speeds proposed.

Figure 11d.- Shows a graph of the Collected charge (fC) vs Scan speed ($\mu$m/s) for each of the proposed velocities.

Figures 12a and 12b.- Show optical microscopy images of the tip used, which corresponds to the side and top view, respectively.

Figure 12c.- Shows a graph of Deflection vs Distance obtained through approaching and retracting the tip to the surface.

Figure 13a.- Shows a PFM phase image obtained in a prerecorded 400 nm thick $BiFeO_3$ (BFO) ferroelectric sample.

Figure 13b.- Shows a DPFM-Si image of the prerecorded 400 nm thick $BiFeO_3$ (BFO) ferroelectric sample.

Figure 13c.- Shows a DPFM-So image of the prerecorded 400 nm thick $BiFeO_3$ (BFO) ferroelectric sample.

Figure 13d.- Shows a mean-profile of the dot-line square area A and B of figures 13b and 13c, wherein both profiles where fitted with a GaussAmp fitting curve in order to obtain the charge generated by the material and hence its piezoelectric constant.

Figure 14a.- Shows a topography of the sample obtained in PFM mode by using a RMN-25Pt300 tip, with an applied load of 4 $\mu$N.

Figure 14b.- Shows a PFM amplitude image of the sample obtained in PFM mode by using a RMN-25Pt300 tip, with an applied load of 4 $\mu$N.

Figure 14c.- Shows a DPFM-Si of the sample, where the recorded pattern was read with a scandirection angle of 45°.

Figure 14d.- Shows a DPFM-So of the sample, where the recorded pattern was read with a scandirection angle of 45°.

## PREFERRED EMBODIMENT OF THE INVENTION

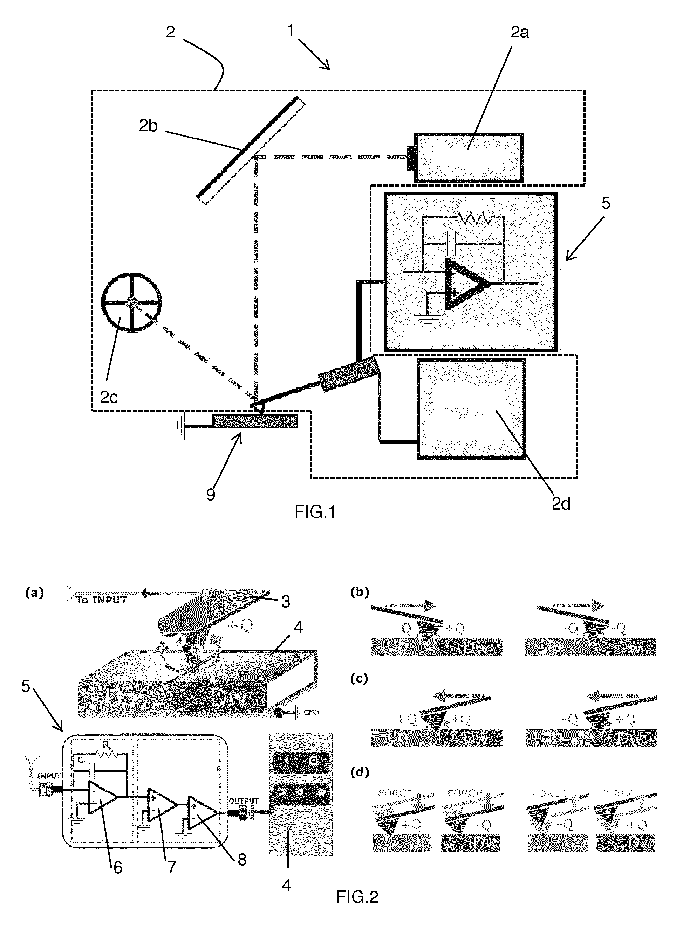

A preferment embodiment of the present invention comprises, as shown in figure 1 and figure 2a, a direct piezoelectric force microscope (1) that in turns comprises an AFM (2) with contact scanning mode, with a probe that comprises a tip (3) connected to a measurement unit (4) through an amplifier means (5). Moreover, the tip (3) has a sharp end that during the measurements it will contact with the surface of a sample (9).

The AFM (2) comprises at least a laser bean generator (2a) that project a laser bean to a mirror (2b). The mirror (2b) reflects the laser bean to the upper surface of the tip (3). The tip (3) position during the measurement varies according to the physical shape of the surface of the sample (9). Moreover, the tip (3) reflects the laser beam to a photodetector (2c) and its reflection also varies according to the physical shape of the surface of the sample (9).

The reflected beam is feed into a piezo scanner tube (2d) in order to maintain a constant force applied throughout the measurements. By maintaining the reflected beam in the same position and recording the movement of the piezo scanner tube the topography of the sample surface can be depicted.

Moreover, the amplifier means (5) comprise:

- a transimpedance amplifier (6) that comprises two inputs and an output, wherein one input is connected to a ground electrical connection and the other input is connected to the tip (3) of the AFM (2),
- a first voltage amplifier (7) that comprises two inputs and an output, wherein one input is connected to a ground electrical connection and the other input is connected to the output of the transimpedance amplifier (6), and
- a second voltage amplifier (8) that comprises two inputs and an output, wherein one input is connected to a ground electrical connection and the other input is connected to the output of the first voltage amplifier (7).

In particular, in this embodiment the three amplifiers (6, 7, 8) are operational amplifiers. The amplification is divided into two stages, a first stage comprises the transimpedance amplifier (6) and the second stage comprises the first and the second voltage amplifier (7, 8). The transimpedance amplifier (6) is configured with a feedback resistor of 1T$\Omega$ which yields a Current-to-Voltage gain of $-1x10^{12}$ V/A. The first and the second voltage amplifier (7, 8) adds an additional gain of 72,25 which, following standard amplifier theory, the final gain of both concatenated stages is the multiplication of each amplifier gain, which results in a gain of $-72,25 \times 10^{12}$ V/A.

## EXPERIMENTAL SETUP

Along the experimental setup the term "Trace" image means an image obtained by the movement of the tip (3) from left to right, and it has been defined as "DPFM-Si" or Signal input.

Additionally, term "Retrace", refers to an image obtained by the previously defined retrace current signal after been processed by the amplifier means (5), and it has been define as the movement of the tip (3) from right to left at the surface of the sample (9), or terms "DPFM-So" or "signal output".

In the experimental setup the direct piezoelectric force microscope (1) has been used. In this experimental setup, even though theoretical gain calculation is precise, we experimentally calibrated the amplifier means (5) twice with a known test resistor of 40 $\pm$ 0,4 G$\Omega$ giving an experimental gain of $-16,9 \pm 1,0 \times 10^{12}$ V/A.

Particularly, the first calibration process was performed by recording the amplifier output voltage vs Time while the applied bias applied to the test resistor was increased in 1mV step.

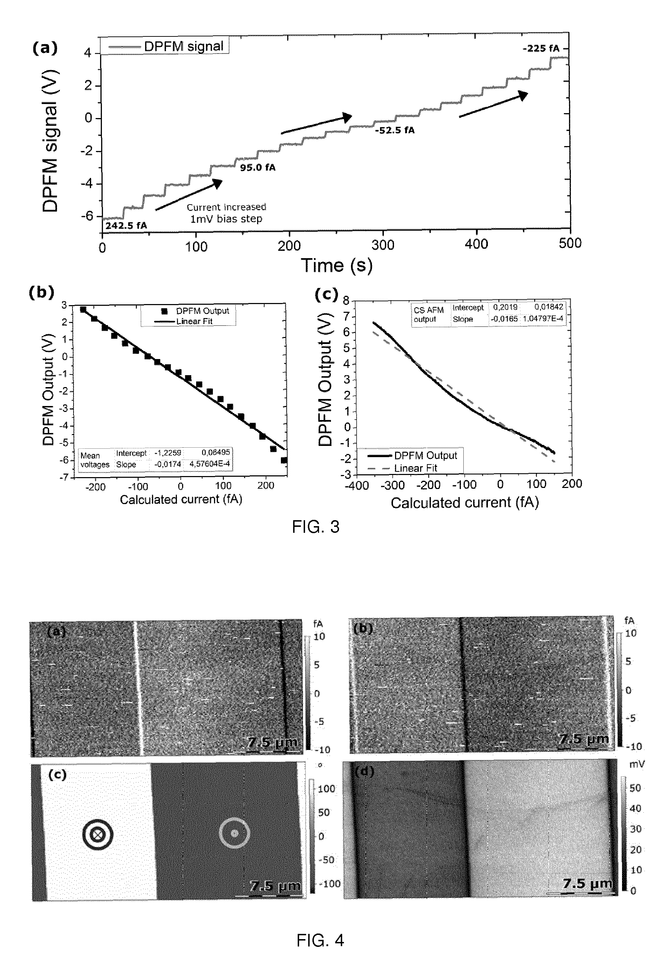

The results of this calibration process are shown in figure 3a. From this data, the average value of amplifier means (5) output voltage was obtained for each applied bias step, and plotted vs the calculated current, see figure 3b. Using a linear fit, we found the first value for the amplifier means (5) calibration constant, as being -0,0174 V/fA (-17,4 $10^{12}$ V/fA) with standard error of 0,000457 V/fA. A second calibration experiment was performed by recording the amplifier means (5) output voltage vs Applied Bias, see figure 3c. The curve was performed in 600 seconds obtained 600 points that we use to perform a linear fit, read line, in figure 3c. The linear fit give us the second calibration constant, which is 0,0165 V/fA with standard error 0,000104 V/fA.

The final value for the amplifier means (5) calibration constant is found by calculating the average of each mean value, which give us a value of -0,0169 V/fA with an standard error of 0,000172 V/fA. To such error, we must sum a 5% additional error that comes from the uncertainty in the test resistor used. The final error is found as 0,00101 V/fA.

The leakage current passing through the transimpedance amplifier (6) induces an error, which will represent the amount of charge lost while measuring. Such leakage current should be as low as 0,1 fA, in order to complete with the necessary requirements to measure the generated piezocharge.

An intrinsic property of the preferred embodiment is that both tip (3) and back-surface of sample (9) are connected to ground, which enables the measurement of high leakage ferroelectric films.

In this preferred embodiment the charge generated by the piezoelectric sample (9) is recorded with tip (3). The physics underlying the current generated are depicted in figure 2b, 2c and 2d. Two different cases are considered, when the tip (3) scans from left to right (Trace) and from right to left (Retrace). While in trace scanning, as shown in figure 2b, the tip (3) moving creates a strained area at the right side of tip (3) apex, while unstrained area is induced at its left side. If an up domain polarization is scanned, a positive charge (+Q) will be generated in the strained region implying a positive flowing current. However the area at the left side of tip (3) apex is being unstrained and a charge of opposite sign is created (-Q). Summing the strained and unstrained generated charges, we can conclude that the current generated while scanning a single ferroelectric domains is zero, because the strained and unstrained charge generation processes are compensated.

Nevertheless, at the domain walls, the situation is completely different. Once the tip (3) apex is located in the domain wall, the strained region, which now has a downwards polarization, will generate a negative charge (-Q). The unstrained up polarization region will keep unchanged, generating a negative charge (-Q). At this point, it is concluded that a negative charge is generated, which, if measured in a given time, will cause a negative current flowing through the tip (3). In this case, the current measured corresponds to the tip (3) loading the down polarization and unloading the up polarization.

Following the explanation, a contrary process occurs when the tip (3) scans from right to left, as shown in figure 2c. If the tip (3) apex is located a domain wall, the unstrained region is located in the down polarization state, and hence, a positive charge (+Q) is generated. At the same time, the strained region, which is in the up polarization state, will generate a positive charge (+Q). Finally, a positive charge is generated at the domain walls and hence a current can be measured. Again, if the tip (3) scans a single domain in this direction no charge will be generated as the strained and unstrained regions will generate opposite charge signs.

Spectroscopy experiments can also be performed, as shown in figure 2d, as the tip (3) exerting a force generates a positive charge (+Q), if an up domain is loaded, or a negative charge (-Q) if a down domain is loaded. By the contrary, a tip (3) ceasing a force generates a negative charge (-Q) if an up domains is unloaded, or a positive charge (+Q) if a down domain is unloaded. As current is being recorded, the force moment is crucial, as the current read increases with increased force rate. We use the formalism for charge generation sign compelling with the charge generated inside the material structure.

Through the aforementioned preferred embodiment and the proposed physical explanation, we have been able to perform the first mapping of piezoelectricity at the nanoscale. In order to perform the experiments, a commercial probe with reference RMN-25PT200H has been used.

The tip (3) is made of a solid platinum wire consisting in an ultra-stiff cantilever, with spring constant of 250 N/m. Such tip (3) ensures that even while applying a high load, tip (3) conductivity nature is preserved, and only a decrease in resolution is undergone. In order to test the new mode, we scanned the sample (9) that is a Periodically Poled Lithium Niobate (PPLN) wich is a typical sample for PFM experiments.

Particularly, the sample (9) consists of a thick crystal which is periodically poled and is commercially available. This material has been widely studied, being its d33 piezoelectric constant in the range of 6-16 pC/N. Before starting the measurements, the sample (9) was previously scanned with the conductive tip (3), in order to discharge its surface screening charges and diminish their effects. The output signal of the amplifier means (5) was recorded at the Trace (shown in figure 4a) and Retrace (shown in figure 4b) scans performed. The images consists of a 256x128 pixels frames, 15 $\mu$m x 30 $\mu$m obtained at a speed of 0.01 ln/s (0,66 $\mu$m/s) and with a loading force of 234 $\mu$N. This particularly low speed is used in order to avoid possible surface screening charge scrapping that can interfere with the collected charge.

From the obtained images, it is found that the current recorded is created in the domain walls as in accordance with the proposed physical model. A peak current of 15 fA is generated in the domain walls while its sign will depend in the tip (3) direction scan, from left to right, or from right to left. With the imaging parameters described, the necessary bandwidth to record current is 5 Hz, which is in accordance with what the amplifier means (5) can perform.

Additionally, the performance of the DPFM method is possible to combine with the PFM method, both performed simultaneously. In order to do so, the back of the sample (9) was connected to an AC generator often comprised at the AFM (2), so an AC voltage signal was applied to the bottom surface of the sample (9) maintaining a DC coupled ground. The result is a PFM phase image as is shown in figure 4c as well as a PFM amplitude image as is shown in figure 4d.

A full electromechanical and piezoelectric generation dynamics study of the sample (9) can be obtained through simultaneously acquiring the DPFM-Si scan, the DPFM-So scan, the PFM phase and the PFM amplitude this four images are shown figure 4.

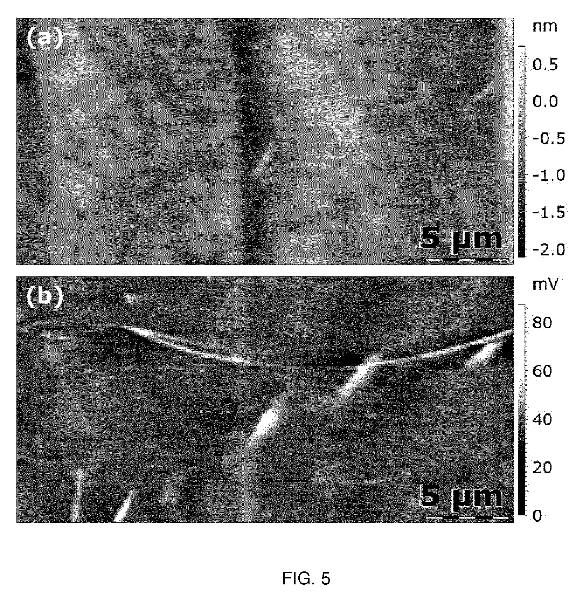

Moreover, standard topography image and friction image, obtained from contact mode operation are recorded, as shown in figure 5a, topography and figure 5b, friction, are standard topography and friction images corresponding to the frames obtained for figure 4 obtained from standard contact mode operation. It is seen that friction image reveals a part of a sample (9) with different lateral forces sensed by the tip (3), which are electromechanical coupled to PFM amplitude image as shown in the figure 4d.

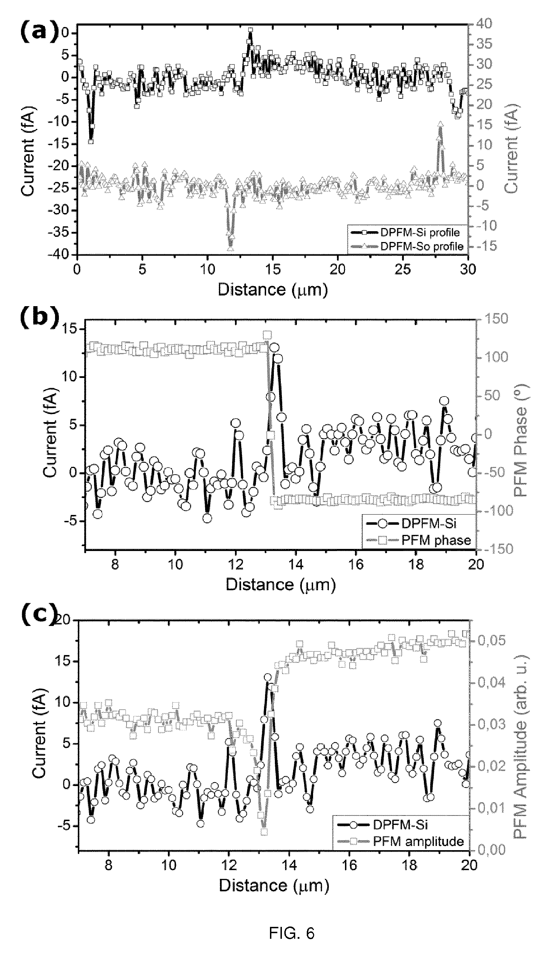

Additionally, from the profiles shown in the figure 6a is possible to see that the current recorded by the transimpedance amplifier (6) is majority collected in the domain walls regions, while in the single domain regions there is a little background signal, a background that is near one order of magnitude less compared to top peaks value. From the profiles, top peaks represent that a positive charge is generated, while bottom peaks represent that a negative charge is created. The peaks delimitate domains position, which have a value of $\pm 15$ fA.

The variations obtained in the single domain areas (areas between peaks) can be caused by multiple phenomena, from Johnson noise, to surface screening charges. Moreover, the peaks from DPFM-Si and DPFM-So do not coincide because of the hysteresis of the AFM (2) piezo scanner tube (2d), hysteresis that changes upon the applied load. We have also compared PFM Phase and PFM amplitude profiles with DPFM-Si signal profiles, which are plotted in figure 6b and figure 6c. There is a slightly shift to the right in the DPFM-Si signal, compared to the PFM phase and PFM amplitude signal. This effect can be explained because of the specific low bandwidth of the transimpedance amplifier (6) 5 Hz, which causes a delay in its output signal. With such mode, a full understanding of the electromechanical and piezoelectricity behavior of a given ferroelectric specimen can be obtained.

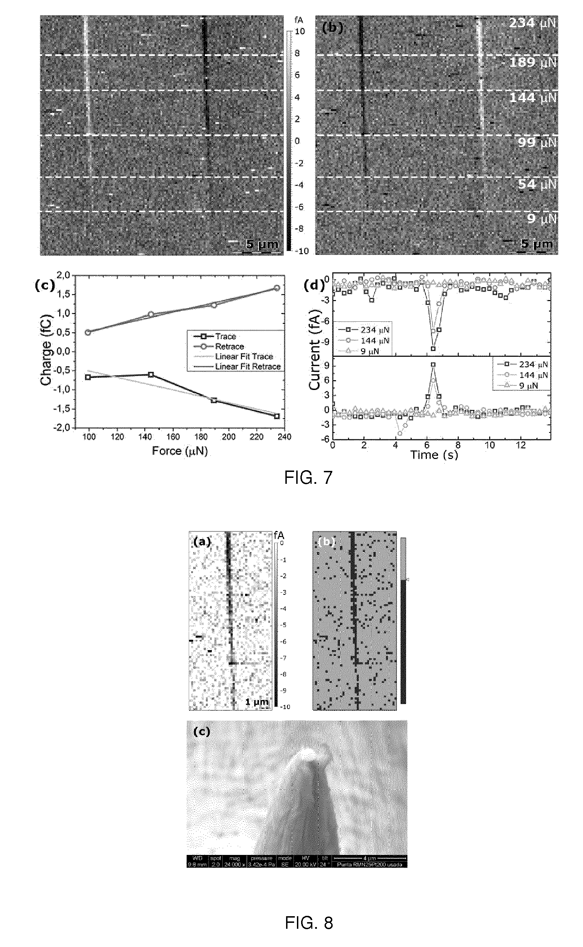

In order to fully probe that the recorded current signal from the amplifier means (5) is related to piezoelectricity, we developed a full set of experiments related to the dynamics of piezoelectric charge generation. The charge generated from piezoelectric effect is proven to be linear with the applied force. This is a key relation in order to fully distinguish piezoelectric charge generation from other possible physical phenomena. The relationship between current and applied load was tested through rescanning the sample (9) by applying different loads. The results are DPFM-Si and DPFM-So images that are plotted in figure 7a and figure 7b, respectively. From bottom to top image, a low loading force of 9 $\mu$N was increased in a step-by-step, in this case each step is 45$\mu$N, manner until a maximum force of 234 $\mu$N. The tip (3) speed was maintained constant along the whole image at a rate of 0,55 $\mu$m/s. For this figures 7a and 7b is possible to observe that at the lowest load of 9 $\mu$N, there is no charge collected by the amplifier means (5).

The lack of current is explained as the transimpedance amplifier (6) is not capable of reading such a small current, which, in the case of a piezoelectric generated current, it would be between 0,1-0,3 fA for such applied force.

This area is specifically interesting in order to conclude the influence of surface charge screening in the current recorded. Before all the DPFM images, the sample (9) was scanned with the same tip (3), at a tip (3) speed 100 times faster, in order to fully discharge the sample (9) surface from surface screening charge. The area scanned with 9 $\mu$N confirms that the surface screening charges does not play an important role in the collected charge.

If the force is increased, the current recorded by the amplifier means (5) increases as well, as it should be expected from a piezoelectric generated charge. More importantly, the width of the current line generated at domain walls does not substantially increase with applied load. The size of this line is not related to the domain wall thickness, but to a convolution effect caused by the tip (3).

Moreover, the size of the tip (3) has been studied through analyzing the figure 7a. A zoomed in region of figure 7b is shown in figure 8a, where this same area was binarized, in order to estimate the mean width of the current line, see figure 8b. Through this method, we can measure the tip (3) size. It was found that the mean line thickness is 297 nm, which results in a tip (3) having an approximate radius of 148,5 nm. More importantly than the exact tip (3) radius is the evolution with the applied force. From figure 8b we can see that the current line slightly increases with the applied load. The increased thickness of the line is partially due to tip (3) degradation, but also to hertzian nanoindentation process. Tip (3) material, platinum, and sample (9), Lithium Niobate, have similar young modulus, 168 GPa and 170 GPa, respectively. In order to reveal tip (3) degradation after all the images, we performed SEM images of the tip (3) in order to check its tip (3) radius, which is shown in figure 8c.

In order to elucidate if the generated charge is proportional to the force we have analyzed the peak current values for DPFM-Si and DPFM-So frames, for each applied load. The maximum and minimum current values found were multiplied by the specific time constant of one pixel, which is 0,39 s, so the most part of the piezoelectric charge is fully integrated. Finally, a relation between the collected Charge vs Applied load is found, which is plotted in figure 7c. A linear fit was used for both positive and negative charge generated confirming the linear relationship between the generated charge and the applied force with Pearson's R of 0,99 and -0,93 for each linear fitting. From the slope of this linear fit, an approximation of the d33 piezoelectric constant of the material can be found with a value of 8,2 pC/N.

The value obtained is an underrated approximation, as there is a part of the current generated that it is not being considered, as only the peak current is integrated. The current profile shape for each applied load was also analyzed, which are plotted in figure 7d. The profiles provide information into the dynamics of the charge generation at the nanoscale as the tip (3) passes throughout the domain wall. It is found that the piezoelectric current has a Gaussian-like function shape, where the area beneath Gaussian curve is the piezo-generated charge. From the profiles, it is concluded that the dominant variable in the increased generated charge is related to the maximum current peak, in comparison with the width of the Gaussian-like curve shape. This is in accordance with the fact that the tip (3) does not significantly increase its tip (3) radius with the applied load. Once the origin of the generated charge has been proved to be the direct piezoelectric effect, we can now perform a mapping of the piezopower generation at the nanoscale with images of figures 4a, 4b, 4c and 4d.

It should be notice that the electrical power generated by the direct piezoelectric effect can be estimated through the use of Ohms law and the feedback resistor value, as denoted by the expression:

$$P = I^2 * R_f$$

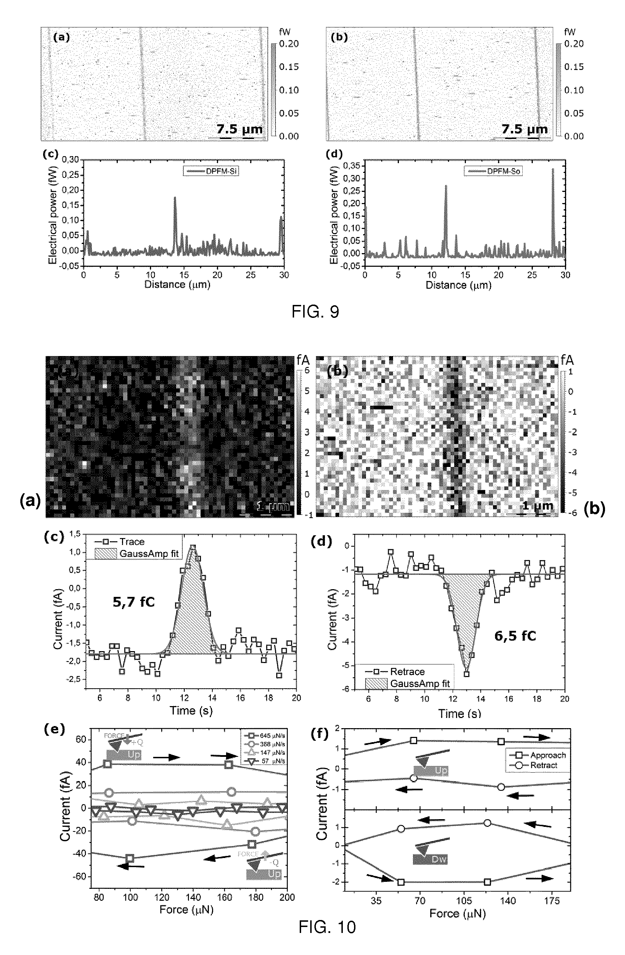

Where $R_f$ is the transimpedance amplifier (6) feedback resistor of $10^{12}$ $\Omega$ and I is the current recorded by the transimpedance amplifier (6). Such approximation can be performed if the input impedance of the voltage amplifier stage is high enough, which in our case is 6,6 x $10^6$ $\Omega$. Through this equation we can find the piezopower generated at DPFM-Si frame (figure 9a) and DPFM-So (figure 9b). Both random profiles obtained from each of the images are shown in Figure 9c and Figure 9d where a clear difference between the electrical power generated at domain walls and within domains are shown.

Obtaining quantitative values of piezoelectric and ferroelectric materials through an easy and reliable method is a high pursued target in the scientific community. In order to prove if the method can be quantitative, we performed a zoomed in image of a domain wall, recording both DPFM-Si and DPFM-So signals, see figure 10a and figure 10b. The images were performed with a tip (3) speed of 0,22 $\mu$m/s and an applied load of 234 $\mu$N. The zoomed in images were sufficiently precise to fully integrate the generated current. In order to reduce thermal noise, the mean average profile for the total number of lines composing the image was obtained for both cases, see figure 10c and figure 10d. The resulting profile corresponds to the piezoelectric generated charge vs distance ($\mu$m) that can be converted into charge vs time through the use of the tip (3) velocity value. With such experimental profiles, see Figure 10c and 10d, we can perform a gauss-amp fit of the obtained curves to estimate the area beneath the curve. We have found that the piezoelectric charge generated is 5,7 $\pm$ 0,4 fC for DPFM-Si and 6,5 $\pm$ 0,5 fC for the DPFM-So profiles. In order to see if the collected charge is a function of the tip (3) speed we studied the evolution of the recorded charge versus tip (3) speed.

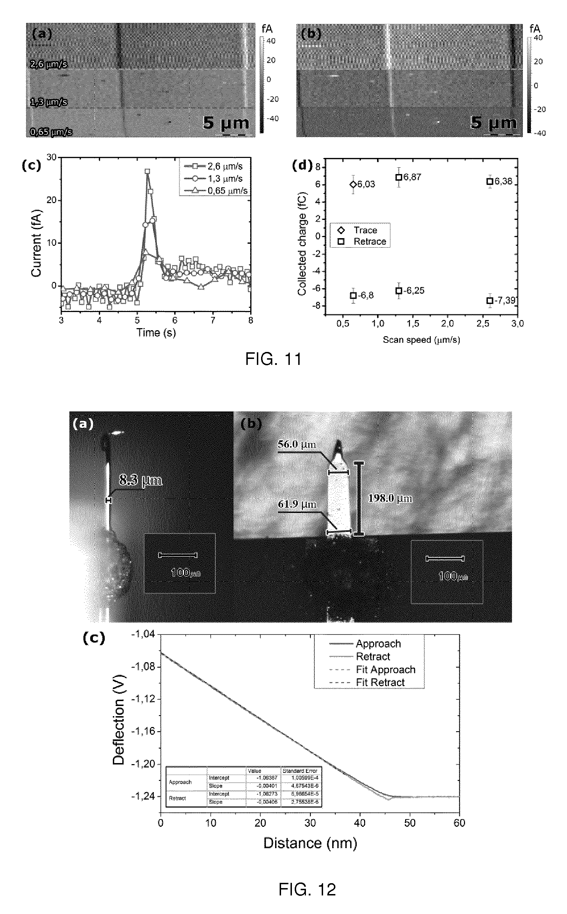

Particularly, the collected charge from the amplifier means (5) was recorded as a function of tip (3) speed. In order to perform the measurements, we scanned the sample (9), maintaining a constant force throughout the measurements. However, the tip (3) speed was varying, from 0.65 $\mu$m/s to 2.6 $\mu$m/s, as shown in figure 11 a and figure 11 b, wherein the DPFM-Si and DPFM-So images were performed at the different scan speeds. In order to see if the collected charge is maintained constant, we extracted profiles from both images, in order to obtained current-vs-time profiles, as the ones showed in figure 11c. The peaks were fitted using a gaussian-amp like function, and the area beneath the fitting was plotted vs the tip (3) speed, see figure 9d. It is found that within speed of less than 2.6 $\mu$m/s the charge collected is not dependent of the tip (3) speed. It is also found that the values obtained are all inside the error bars between them, so we cannot perform any correlation about the charge recorded and the speed used to perform the images.

The measured charge corresponds to a loading and unloading mechanism, and hence to find the piezoelectric charge we must divide this charge by a factor of two.

In order to calibrated the exact force applied to the sample (9) we measured the specific dimensions of the cantilever used throughout the measurements in the manuscript. From the tip (3) dimensions, we used the following formula, which was provided by the tip (3) manufacturer:

$$k = \frac{EWt^3}{4L^3} \text{(N/m)}$$

Where:

E is the young modulus of platinum (168,000,000,000 N/m$^2$) W is the measured cantilever width (m)
L is the length of the cantilever (m)
t is the tickness of the cantilever which is calculated as follows:

$$t = \frac{pir^2}{W}(\text{m})$$

Where r is the radius of the wire that is used to produce the cantilever, 0.0000125m

The cantilever was analyzed through an optical microscope, images can be seen in Figure 12a, side view and Figure 12b, top view. Using the measured units and with the above formulas, we found the exact K constant of the cantilever which is 184 N/m. The nominal spring value provided by the manufacturer was 250 $\pm$ 100 N/m. By performing the above calculations and measurements, the error for such value can be reduced to be $\pm$ 7 N/m. We have supposed a measurement error for optical microscopy images of $\pm$ 1 $\mu$m for the length error, $e_L$ and width error, $e_W$. The thickness error is calculated as:

$$e_t = \frac{pi\ r^2}{W^2} e_W = 1,4\ \text{E-7 (m)}$$

By error propagation, we can use the following formula to calculate the error for the cantilever spring constant:

$$Error = \sqrt{\left(\frac{3e_L EW t^3}{4L^4}\right)^2 + \left(\frac{3e_t t^2 EW}{4L^3}\right)^2 + \left(\frac{e_W t^3 E}{4L^3}\right)^2} = \sqrt{7.8 + 21,6 + 9.8}$$

$$= 6,2\ N/m$$

The final value for the cantilever spring constant is then found to be 184 $\pm$ 7 N/m.

The specific deflection sensitivity of the cantilever used is found by performing several force vs distance curves like the one showed in Figure 12c. From the linear part, a deflection sensitivity constant is obtained from a linear fitting and so the specific deflection signal-which is in voltage units- can be converted to nm units. With such linear fit, we found that the calibration constant is 401 nm/V and 403 nm/V for approach and retract curves respectively. The error for such linear fittings is not considered since its $\pm$ 3 nm, which represents less than 1% error. The spring constant of the cantilever used remains the same for all the measurements, since it is exactly the same probe. However, the deflection vs distance curve has to be performed each time that the cantilever is placed in the holder. Figure 12c only shows an example of the curve used to calibrate the deflection sensitivity.

The exact force exerted was calculated using a Force-vs-Distance curve, and with such deflection sensitivity and the cantilever spring constant, the applied force was obtained. To diminish the force applied error, we have calculated the exact force constant of the probe used in the experiment, through the use of a formula provided by the tip (3) manufacturer and the real dimensions of the cantilever. Upon calculations, we found that the applied load is 234 $\mu$N, which yield a piezoelectric constant of 12,1 pC/N and 13,8 pC/N, respectively. This is in accordance with the value found in the bibliography, where the d33 constant is in the order of 6-16 pC/N. In fact, we have evaluated the error that corresponds to the proposed method. The force error was found to be $\pm$ 9 $\mu$N, mainly caused by obtaining the exact spring constant of the cantilever used. The charge measurement error is calculated as the sum of the statistical error, the error created from the transimpedance amplifier (6) leakage current and the error obtained from the electrical calibration. The total error is $\pm$ 0,7 fC for DPFM-Si and $\pm$ 0,9 fC for DPFM-So profiles. Summing all the errors, we found that the d33 piezoelectric constant of our sample (9) is 12,1 $\pm$ 3,1 pC/N and 13,8 $\pm$ 3,9 pC/N for DPFM-Si and DPFM-So respectively. As we are crossing the exact same domain, we can use both quantities to acquire the final d33 constant of the material as being 12,9 $\pm$ 2,4 pC/N standard error.

Spectroscopy events have been proven in order to elucidate if the method could also be employed not only for imaging, but also as a tool of characterizing the piezoelectric response of any piezoelectric material. For such purpose, tip (3) was placed in the middle of a ferroelectric domain and a Force-vs-Distance curve was performed. The curve starts with a loading force of 5 $\mu$N and it is increased to a maximum value of 258 $\mu$N to go back to the initial 5 $\mu$N load. The current recorded from the transimpedance amplifier (6) was measured for different applied force rates, see Figure 10e. As the force/time rate is increased, the recorded current increases as well confirming its direct relationship. Different spectroscopy events were obtained, see Figure 10f; top which corresponds to a spectroscopy for up domain area and bottom for down domain area. It is found that for the up domain case, a loading curve will generate a positive current; however the current sign is the opposite in the case of a down polarization domain. The spectroscopy curves were started with the tip (3) in contact with the surface and an applied load of 5 $\mu$N, otherwise the current read will be generated by electrostatic effects where the tip (3) passes from air to the sample (9) surface. For both curves a force/time ratio of 53,2 $\mu$N/s was employed.

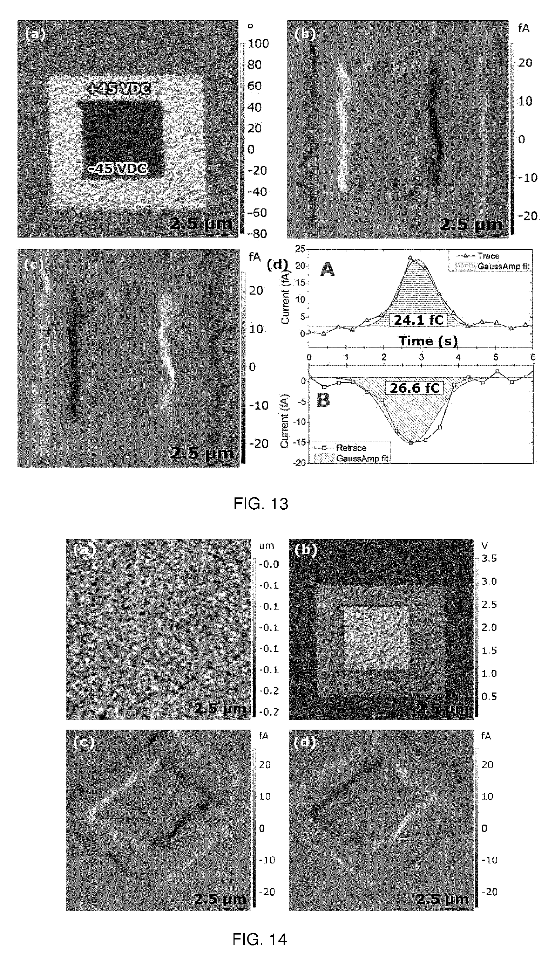

The feasibility of the method has been successfully proven for the case of a thick ferroelectric crystal with a low-intermediate piezoelectric d33 constant. In order to test the usability of the proposed methodology a 400 nm-thick BFO ferroelectric layer over platinum, commercially available, was tested using DPFM. The sample (9) was previously scanned using PFM in order to record a pattern in its surface-the pattern is shown in PFM phase image of figure 13a, where DC voltages of +45 VDC and -45 VDC were applied to the bottom contact of the sample (9) in order to poll the domains. The same area was scanned using normal PFM mode in order to see if the domains can be read. Once recorded, DPFM-Si and DPFM-So images were performed, which are shown in figure 13b and figure 13c. It is found that the current generated is only present at domain walls, however with a similar scanning parameters, it is found that the peak current is near 25 fA. BFO is a well-known characterized ferroelectric that has a young modulus of 170 GPa and a surface screen charge of 80 $\mu$C/cm2[40]. These values are the same for the first test sample (9), a PPLN[29]. However, the piezoelectric constant is found way different, as PPLN is in the order of 6-16 pC/N, BFO has a reported d33 constant between 16-60 pC/N[40]. These differences in the measured d33 constants can be used to explain the different amount of current that is recorded between PPLN and BFO. In order to discard imaging artifacts, the same pattern was reread in DPFM mode but rotating the scan direction, which rotates the image motives as well.

In particular, topography image, figure 14a, and PFM amplitude image, figure 14b, where obtained through the use of PFM in order to record the proposed pattern into the BFO sample (9). In order to fully discard artifacts related to the scan direction, we rotated the scan direction by 45°, resulting DPFM-Si and DPFM-So image are plotted in figure 14c and figure 14d. From this experiment we can conclude that the charge generation dynamics rotates as well with the scan direction, as it should be from a piezo-generated charge. From such experiments, we can conclude that the read current is not cause by possible electronic artifacts related to the scan direction.

Therefore, it's found that the generated charge has its maximum value where the tip (3) passes from a full polarized area to the opposite polarization direction. The quantitativeness of the mode was again tested in order to provide the d33 value for the BFO sample (9). The same procedure as explained for figure 10c and figure 10d were employed for figure 13b and figure 13c. The squared area in figures 13b and 13c were used to obtain an average of the lines composing squares resulting in the average profile of figure 13d. The top part corresponds to the A square and the bottom part corresponds to the B square, profiles that are then fitted with a gauss-amp fitting curve, red and blue lines respectively. The values obtained for the fitting curves are 24,1 $\pm$ 1,7 fC and -26,6 $\pm$ 3,4 fC, which, divided by the force applied, gave us a d33 constant of 44,1 $\pm$ 6,9 pC/N and 48,7 $\pm$ 12,7 pC/N for DPFM-Si and DPFM-So profiles, which, averaged, give us a final d33 value of 46,4 $\pm$ 7,2 pC/N.

## Claims

1. Direct piezoelectric force microscope (1) for imaging and/or characterizing ferroelectric and/or piezoelectric samples, **characterized in that** it comprises:

   - a probe having a tip (3), wherein the tip (3) is adapted to move across the surface of the sample (9) so as to discharge all the superficial charges of the sample (9) and once discharged, applying a mechanical load to generate a direct piezoelectric effect within the sample (9), and
   - a measurement unit (4) that is connected to the probe for obtaining a generated current signal that comprises the direct piezoelectric effect of the sample (9), and wherein the measurement unit (4) comprises amplifier means (5) in order to transform the generated current into a voltage signal that comprises nanoscale information about the topography of the sample (9) and/or its ferroelectric and/or piezoelectric properties.

2. Direct piezoelectric force microscope (1) according to claim 1, **characterized in that** the probe is adapted to apply a mechanical load to the sample (9) surface between 1 nN to 5 N.

3. Direct piezoelectric force microscope (1) according to claim 1, **characterized in that** the measurement unit (4) comprises an electrical ground plug for connecting the lower part of the sample (9) and the probe to ground.

4. Direct piezoelectric force microscope (1) according to claim 1, **characterized in that** the amplifier means (5) comprise at least a transimpedance amplifier that in turn comprises two inputs and an output, wherein one input is connected to a ground electrical connection and the other input is connected to the tip (3) in order to receive the current map signal for converting it to a measurement voltage signal at its output.

5. Direct piezoelectric force microscope (1) according to claim 4, **characterized in that** the transimpedance amplifier (6) has a low leakage current that is less than 20fA and a bandwidth that is at least 1 Hz.

6. Direct piezoelectric force microscope (1) according to claim 4, **characterized in that** the amplifier means (5) comprise:

- a first voltage amplifier (7) that comprises two inputs and an output, wherein one input is connected to a ground electrical connection and the other input is connected to the output of the transimpedance amplifier (6) in order to realize a first increase of the amplitude of the measurement voltage current signal at its output, and
- a second voltage amplifier (8) that comprises two inputs and an output, wherein one input is connected to a ground electrical connection and the other input is connected to the output of the first voltage amplifier (7) in order to realize a second increase of the amplitude of the measurement voltage current signal at its output.

7. Direct piezoelectric force microscope (1) according to claim 1, **characterized in that** the probe is comprised by an atomic force microscope, wherein the tip (3) is adapted to apply a mechanical load to the sample (9) surface between 1 nN to 500 $\mu$N.

8. Direct piezoelectric force microscope (1) according to claim 1, **characterized in that** the probe is comprised by a nanoindenter, wherein the tip (3) is adapted to apply a mechanical load to the sample (9) surface between 1 nN to 5 N.

9. Method for imaging and/or characterizing ferroelectric and/or piezoelectric samples using the direct piezoelectric force microscope (1) described in any previous claim, wherein the method is **characterized in that** it comprises the following steps:

a) placing the sample (9) in the direct piezoelectric force microscope (1),
b) connecting the lower part of the sample (9) and the probe o to the electrical ground plug,
c) generating a dry atmosphere at least over the measurement unit (4), wherein the humidity is lower that 10%,
d) moving the tip (3) of the force microscopy across the surface of the sample (9), from left to right or from right to left, in order to discharge all the superficial charges of the sample (9) through said tip (3),
e) collecting a generated current signal produced by the contact of the tip (3) with the surface of the sample (9) without superficial charges,
f) sending the generated current signal to the measurement unit (4) in order to transform the generated current into a voltage signal that comprises obtain nanoscale information about the topography of the sample (9) and/or its ferroelectric and/or piezoelectric proprieties,
g) sending the voltage signal to the measurement unit (4), and
h) representing visually, through the graphical interface, the topography of the sample (9) surface and/or its ferroelectric and/or piezoelectric proprieties.

10. Method according to claim 9, **characterized in that** when the sample (9) is a ferroelectric and/or piezoelectric sample (9) the step d) comprises the following step:

- moving the tip (3) across the surface of the sample (9) while applying, through the tip (3), a predetermined mechanical load in order to generate an electrical topography signal that comprises the shifts of the probe produced by the different shapes of the sample (9) surface.

11. Method according to claim 9, **characterized in that** when the sample (9) is a ferroelectric sample (9) the step d) comprises the following step:

- moving the tip (3) across the surface of the sample (9) while applying, through the tip (3), a predetermined mechanical load in order to generate a current signal that comprises an electrical current map signal related to the ferroelectricity of the sample (9) and which is proportional to the predetermined mechanical load.

12. Method according to claim 9, **characterized in that** when the sample (9) is a ferroelectric sample (9) the step d) comprises the following step:

- moving the tip (3) across the surface of the sample (9) while applying, through the tip, a predetermined mechanical load in order to:

■ obtaining a topography signal that comprises the shifts of the tip, and

■ acquiring the generated current signal that comprises an electrical current map signal related to the ferroelectricity of the sample (9) and which is proportional to the predetermined mechanical load.

**13.** Method according to claim 9, **characterized in that** when the sample (9) is a piezoelectric sample (9) the step d) comprises the following step:

- placing the tip (3) in at least a spot of the piezoelectric sample (9), and
- applying in the same spot, through the tip (3), a variable mechanical load, that can range from 1nN to 5N, in order to collect the generated current signal that comprises an electrical current signal generated by the piezoelectricity of the sample (9) and which is proportional to the variable mechanical load.

**14.** Method according to claim 9, **characterized in that** when sample (9) is a ferroelectric and/or piezoelectric sample (9) the step d) comprises the following step:

- moving the tip (3) across the surface of the ferroelectric and/or piezoelectric sample (9) from a left to a right point, while applying, through the tip (3), a predetermined mechanical load in order to collect the generated current signal that comprises a trace current signal generated by the piezoelectric effect from measured form left to right of sample (9), and which is proportional to the predetermined mechanical load,
- moving the tip (3) across the surface of the ferroelectric and/or piezoelectric sample (9) from the right to the left point, while applying, through the tip (3), a predetermined mechanical load in order to collect the generated current signal that comprises a retrace current signal generated by the piezoelectric effect from measured form right to left of the sample (9), and which is proportional to the predetermined mechanical load,
- extracting a line profile from the trace current signal map, and/or the retrace current signal, against the distance covered by the tip (3),
- obtaining a profile of the electrical generated current signal vs time through the use of tip (3) velocity,
- obtaining a generated charge by integrating the aforementioned electrical current signal, and
- calculating the piezoelectric constant of the sample (9) through dividing the generated charge between the predetermined mechanical load applied by the tip (3).

**15.** Method according to claim 9, **characterized in that** when the probe is comprised by an AFM (2), the AFM (2) is establish to contact operation mode.

FIG.1

**(a)** To INPUT

FIG.2

FIG. 3

FIG. 4

FIG. 5

FIG. 6

FIG. 7

FIG. 8

FIG. 9

FIG. 10

FIG. 11

FIG. 12

FIG. 13

FIG. 14

Europäisches
Patentamt

European
Patent Office

Office européen
des brevets

# EUROPEAN SEARCH REPORT

**Application Number**

EP 16 38 2398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/301324 A1 (ROELOFS ANDREAS [US] ET AL) 22 October 2015 (2015-10-22) * paragraph [0030] - paragraph [0039] * * paragraphs [0047], [0053], [0057], [0060]; claim 1; figures 1-8 * | 1-15 | INV. G01Q60/30 G02B21/00 |
| X | US 2009/168637 A1 (TRAN QUAN ANH [US] ET AL) 2 July 2009 (2009-07-02) * paragraphs [0016], [0017], [0023], [0025]; figures 1-4 * | 1-15 | |
| A | US 6 868 853 B1 (NILSSON THOMAS [SE] ET AL) 22 March 2005 (2005-03-22) * column 3, line 32 - line 34 * | 9-15 | |
| A | WO 2013/192617 A1 (BRUKER NANO INC [US]) 27 December 2013 (2013-12-27) * the whole document * | 1-15 | |

|  |  |
|---|---|
| | TECHNICAL FIELDS SEARCHED (IPC) |
| | G01Q G02B |

The present search report has been drawn up for all claims

| Place of search | Date of completion of the search | Examiner |
|---|---|---|
| Munich | 14 February 2017 | Sedlmaier, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

## ANNEX TO THE EUROPEAN SEARCH REPORT
## ON EUROPEAN PATENT APPLICATION NO.

EP 16 38 2398

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2017

| Patent document cited in search report | | Publication date | Patent family member(s) | | Publication date |
|---|---|---|---|---|---|
| US 2015301324 | A1 | 22-10-2015 | NONE | | |
| US 2009168637 | A1 | 02-07-2009 | US 2009168637 A1 | | 02-07-2009 |
| | | | US 2013003521 A1 | | 03-01-2013 |
| US 6868853 | B1 | 22-03-2005 | AU 8035201 A | | 13-03-2002 |
| | | | BR 0113410 A | | 29-07-2003 |
| | | | CA 2418039 A1 | | 07-03-2002 |
| | | | CN 1468121 A | | 14-01-2004 |
| | | | EP 1315532 A1 | | 04-06-2003 |
| | | | JP 2004516046 A | | 03-06-2004 |
| | | | KR 20030066606 A | | 09-08-2003 |
| | | | PL 360177 A1 | | 06-09-2004 |
| | | | SE 516554 C2 | | 29-01-2002 |
| | | | US 6868853 B1 | | 22-03-2005 |
| | | | WO 0218000 A1 | | 07-03-2002 |
| WO 2013192617 | A1 | 27-12-2013 | EP 2864798 A1 | | 29-04-2015 |
| | | | KR 20150033673 A | | 01-04-2015 |
| | | | KR 20160106204 A | | 09-09-2016 |
| | | | WO 2013192617 A1 | | 27-12-2013 |

EPO FORM P0459

For more details about this annex : see Official Journal of the European Patent Office, No. 12/82